# EUROPÄISCHE PATENTANMELDUNG

(11) **EP 1 408 314 A2**
(43) Veröffentlichungstag der Anmeldung: **14.04.2004**
(21) Anmeldenummer: 03017333.0
(22) Anmeldetag: 31.07.2003
(51) Int. Cl.: G01F 1/78

(54) **Vorrichtung und Verfahren zur Massenstrommessung**

(30) Priorität: 10.10.2002 DE 10247322
(71) Anmelder: ROBERT BOSCH GMBH, 70442 Stuttgart (DE)
(72) Erfinder: Goesling, Bernulf, 73760 Ostfildern (DE); da Silva, Pedro, 73230 Kirchheim (DE)

(57) **Zusammenfassung**

Die Erfindung betrifft eine Vorrichtung zur Massenstrommessung mit einem in einem Strömungskanal angeordneten, von einem Elektromotor angetriebenen Gebläse oder Pumpe, wobei der Elektromotor über eine Versorgungsleitung an eine Spannungsversorgung angeschlossen ist, und wobei dem Elektromotor eine Motorregelung mit Drehzahlregelung zugeordnet ist. Um bei einer solchen Vorrichtung den Gasmassenstrom auf wirtschaftliche Weise bestimmen zu können, ist erfindungsgemäß vorgesehen, dass in die Versorgungsleitung ein Strom-Signalwandler integriert ist, der den Strom in der Versorgungsleitung aufnimmt und ein Ausgangssignal an eine Meßwertleitung abgibt.

## Beschreibung

Die Erfindung betrifft eine Vorrichtung zur Massenstrommessung mit einem in einem Strömungskanal angeordneten, von einem Elektromotor angetriebenen Gebläse oder Pumpe, wobei der Elektromotor über eine Versorgungsleitung an eine Spannungsversorgung angeschlossen ist, und wobei dem Elektromotor eine Motorregelung mit Drehzahlregelung zugeordnet ist. Der Massenstrom kann vorzugsweise ein Gas oder eine Flüssigkeit sein.

### Stand der Technik

Die Erfindung betrifft auch ein Verfahren zur Gas-Massenstrommessung mit, in einem Strömungskanal angeordneten, von einem Elektromotor angetriebenen Gebläse, wobei der Elektromotor über eine Versorgungsleitung von einer Spannungsversorgung mit Spannung versorgt wird und wobei der Elektromotor mittels einer Motorregelung auf konstante Drehzahl geregelt wird.

Um bei Heizgeräten, insbesondere Gas-Heizgeräten (z.B. Brennwertgeräten) eine Verbrennungssteuerung mit gutem Wirkungsgrad und Abgasqualität zu gewährleisten, sind genaue Kenntnisse über Betriebs- und Umweltparameter von Bedeutung. Hierbei ist der Wert des durch das Heizgerät geförderten Gasmassenstromes zu berücksichtigen. Dieser wird beispielsweise beeinflußt durch variable Parameter, wie Temperatur und Verschmutzung. Weiterhin haben bauliche Gegebenheiten, wie die Abgasrohrlänge, die bei der Erstinbetriebnahme berücksichtigt werden müssen, einen Einfluss auf den Gasmassenstrom.

Zur Ermittlung des Gasmassenstromes werden Massenstromsensoren, wie Heißdraht oder Heißfilmsensoren eingesetzt. Diese beanspruchen jedoch zusätzlichen Bauraum und bedingen einen hohen Teile- und Montageaufwand.

Es ist Aufgabe der Erfindung, eine Vorrichtung der eingangs erwähnten Art zu schaffen, mit der ein Massenstrom wirtschaftlich bestimmt werden kann.

Es ist auch Aufgabe der Erfindung, hierzu ein Verfahren für einen Gas-Massenstrom bereit zu stellen.

### Vorteile der Erfindung

Die, die Vorrichtung betreffende Aufgabe wird dadurch gelöst, dass in die Versorgungsleitung ein Strom-Signalwandler integriert ist, der den elektrischen Strom in der Versorgungsleitung aufnimmt und ein Ausgangssignal an eine Meßwertleitung abgibt.

Das an der Antriebswelle des Gebläses erzeugte Drehmoment kann als proportional zum Strom in der Motorwicklung des Elektromotors angenommen werden. Bei konstanter Drehzahl des Elektromotors ist das erzeugte Drehmoment vom Massenstrom im Lüfter abhängig und somit auch der Strom in der Motorwicklung. Durch Messung des Stroms bei gleichzeitigem Konstanthalten der Drehzahl kann ein Ausgangssignal erzeugt werden, das mit dem Massenstrom durch das Gebläse korreliert ist. Dieses Ausgangssignal kann z.B. zur automatischen Anpassung an verschiedene Abgasrohrlängen oder zur Verbrennungsregelung benutzt werden. Die erfindungsgemäße Anordnung benötigt insbesondere keine Meßsensoren im Abgaskanal und hält damit den Teile- und Montageaufwand gering.

Bevorzugter Weise wird die Vorrichtung in dem Zuluftkanal oder dem Abgaskanal eines Heizgerätes eingesetzt. Hierbei hat es sich insbesondere herausgestellt, dass der Massenstrom abhängig von Temperaturveränderungen ist. Andere Einflüsse, wie beispielsweise Verschmutzungen können zumindestens teilweise kompensiert werden.

Gemäß einer bevorzugten Erfindungsvariante kann es vorgeshen sein, dass der Elektromotor ein elektronisch kommutierter Gleichstrommotor ist. Dieser zeichnet sich durch einen hohen Wirkungsgrad aus und kann insbesondere einfach und genau drehzahlgeregelt werden. Um eine automatisierte Steuerung eines Heizgerätes in Abhängigkeit vom Massenstrom durchführen zu können, kann vorgesehen sein, dass das Ausgangssignal an eine Regelschaltung weitergeleitet ist, und dass die Regelschaltung das Ausgangssignal mit einem oder mehreren Parametern des Heizgerätes verschaltet.

Die das Verfahren betreffende Aufgabe der Erfindung wird dadurch gelöst, dass mittels eines Strom-Signalwandlers aus dem Strom in der Versorgungsleitung ein Ausgangssignal abgeleitet wird, und dass das Ausgangsignal in eine Meßwertleitung abgegeben wird. Damit lassen sich die vorstehend beschriebenen Erfolge erzielen.

### Zeichnung

Die Erfindung wird im folgenden anhand eines in der Zeichnung dargestellten Ausführungsbeispieles näher erläutert. Es zeigen:

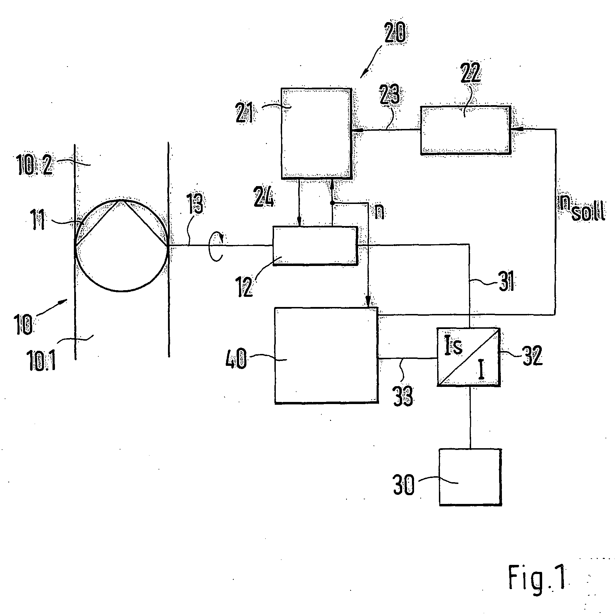

- Fig. 1: eine schematische Darstellung einer Vorrichtung zum Ermitteln eines Gasmassenstromes in einem Gasheizgerät und
- Fig. 2: in schematischer Darstellung eine Regelanordnung für das Gasheizgerät.

### Ausführungsbeispiel

Das Gasheizgerät besitzt einen Strömungskanal 10. Dieser kann entweder der Zuluftkanal zu einem Gasbrenner oder, wie vorliegend, der dem Gasbrenner zum Schornstein führende Abgaskanal sein.

In dem Strömungskanal 10 ist ein Gebläse 11 angeordnet. Vor dem Gebläse 11 bildet der Strömungskanal 10 eine Gaszuführung 10.1. Dahinter eine Gasabführung 10.2.

Das Gebläse 11 ist über eine Antriebswelle 13 an einen Elektromotor 12 angekoppelt. Der Elektromotor 12 ist über eine Versorgungsleitung 31 mit einer Spannungsversorgung 30 verbunden. In die Versorgungsleitung 31 ist ein Strom-Signalwandler 32 geschaltet. Im einfachsten Fall kann dieser ein elektrischer Widerstand sein, an dem der zum Strom proportionale Spannungsabfall abgegriffen wird. Vom Strom-Signalwandler 32 geht eine Meßwertleitung 33 ab. Über diese kann ein vom Strom-Signalwandler 32 generiertes Ausgangssignal an eine Regelschaltung 40 übertragen werden. Die Regelschaltung 40 gibt ein Drehzahl-Sollsignal nₛₒₗₗ an eine Steuerwertschaltung 22 ab, welche über die Leitung 23 mit der Drehzahlregelung 21 verbunden ist.

Dem Elektromotor 12 ist die Motorregelung 20 aus Drehzahlregelung 21 und Steuerwertschaltung 22 zugeordnet.

Die Steuerwertschaltung 22 gibt den vom Betriebszustand abhängigen Sollwert nₛₒₗₗ an die Drehzahlregelung 21 vor. Diese regelt über die Signalleitung 24 den Elektromotor 12 auf eine konstante Drehzahl n ein. Das Gebläse 11 dreht dann mit einer entsprechend konstanten Drehzahl. Als Folge wird ein konstanter Gasmassenstrom durch den Strömungskanal 10 gefördert. Dabei kann der Strom in der Versorgungsleitung 31 als charakteristische Kenngröße für den Gasmassenstrom dienen. Bei Änderung des Gasmassenstromes, beispielsweise infolge Änderung eines Betriebsparameters oder zur Einmessung des Heizgerätes auf die Abgasrohrlänge bei Erstinbetriebnahme wird auf die konstante Drehzahl n nachgeregelt und der Massenstrom im Strömungskanal 10 konstant gehalten.

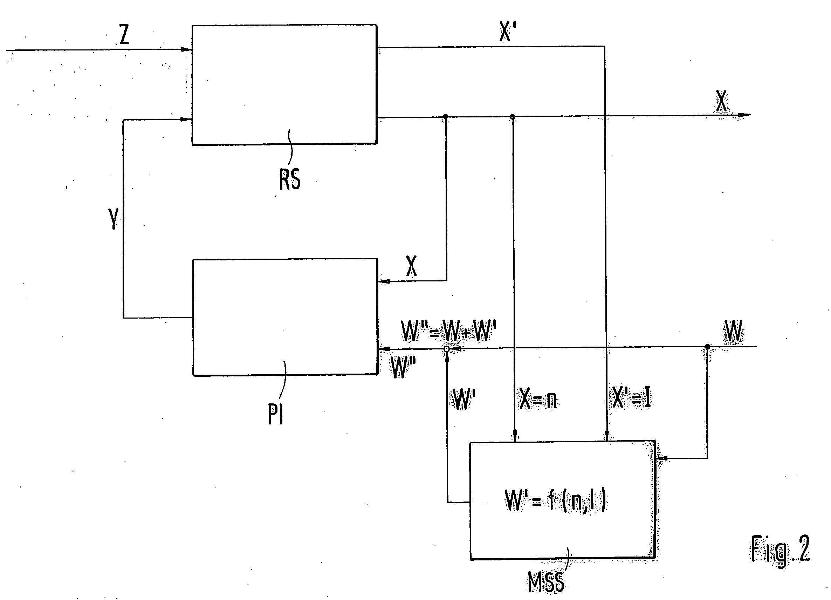

In Fig. 2 ist eine mögliche Ausgestaltung einer Regelanordnung näher gezeigt. Diese weist eine Regelstrecke RS auf, die das Gasheizgerät darstellt. Auf die Regelstrecke RS wirkt eine Störgröße Z ein. Diese kann die Rohrlänge des Abgaskanales, die Temperatur oder der Luftdruck sein. Aus der Regelstrecke RS wird der dem Elektromotor 12 zugeleitete Strom I als Meßgröße x' ausgelesen und an eine Massenstromsteuerung weitergeleitet. In die Massenstromsteuerung kann auch die aktuelle Drehzahl n des Elektromotors eingelesen werden (Meßgröße x').

In der Massenstromsteuerung MSS wird ein Korrektursignal W' als Funktion in Abhängigkeit der Drehzahl n und des Stromes I generiert. Das Korrektursignal W' wird zu dem vorgegebeneen Sollwert W hinzuaddiert, um den Einfluß der Störgröße Z auszugleichen. In einem Drehzahlregler PI wird aus dem Summanden w" von Sollwert W und Korrektursignal W' 'eine Stellgröße Y generiert. Diese bewirkt dann die Einregelung des Elektromotors 12.

In der Massenstromsteuerung MSS sind Betriebskennwertkurven abgelegt. In die Massenstromsteuerung MSS ist vorteilhafterweise ebenfalls der Sollwert W einlesbar, um eine genaue Regelung x = n zu ermöglichen.

Wie Fig. 2 zeigt, kann die Massenstromsteuerung MSS optional auch ein Massenstromsignal für den elektrischen Verbund liefern.

## Patentansprüche

1. Vorrichtung zur Massenstrommessung mit einem in einem Strömungskanal (10) angeordneten, von einem Elektromotor (12) angetriebenen Gebläse oder Pumpe (11), wobei der Elektromotor (12) über eine Versorgungsleitung (31) an eine Spannungsversorgung (30) angeschlossen ist, und wobei dem Elektromotor (12) eine Motorregelung (20) mit Drehzahlregelung (21) zugeordnet ist,
**dadurch gekennzeichnet,**
**dass** in die Versorgungsleitung (31) ein Strom-Signalwandler (32) integriert ist, der den Strom in der Versorgungsleitung (31 ) aufnimmt und ein Ausgangssignal an eine Meßwertleitung (33) abgibt.

2. Vorrichtung nach Anspruch 1,
**dadurch gekennzeichnet,**
**dass** das Gebläse (11) in dem als Zuluftkanal oder als Abgaskanal ausgebildeten Strömungskanal (10) eines Heizgerätes, insbesondere eines Gasheizgerätes angeordnet ist.

3. Vorrichtung nach Anspruch 1 oder 2,
**dadurch gekennzeichnet,**
**dass** der Elektromotor (12) ein elektronisch kommutierter Gleichstrommotor ist.

4. Vorrichtung nach Anspruch 2 oder 3,
**dadurch gekennzeichnet,**
**dass** das Ausgangssignal (33) an eine Regelschaltung (40) weitergeleitet ist, und
**dass** die Regelsschaltung (40) das Ausgangssignal (33) mit einem oder mehreren Parametern des Heizgerätes verschaltet.

5. Verfahren zur Gas-Massenstrommessung mit in einem Strömungskanal (10) angeordneten, von einem Elektromotor angetriebenen Gebläse (11), wobei der Elektromotor (12) über eine Versorgungsleitung (31) von einer Spannungsversorgung (30) mit Spannung versorgt wird und wobei der Elektromotor (12) mittels einer Motorregelung (20) auf konstante Drehzahl(en) geregelt wird,
**dadurch gekennzeichnet,**
**dass** mittels eines Strom-Signalwandlers (32) aus dem Strom (I) in der Versorgungsleitung (31) ein Ausgangssignal abgeleitet wird, und
**dass** das Ausgangssignal in eine Meßwertleitung abgegeben wird.

6. Verfahren nach Anspruch 5,
**dadurch gekennzeichnet,**
**dass** mit dem Gebläse (11) eine Gasströmung in einem Zuluftkanal oder Abgaskanal eines Heizgerätes erzeugt wird.

7. Verfahren nach Anspruch 6,
**dadurch gekennzeichnet,**
**dass** das Ausgangssignal an eine Regelschaltung (40) geleitet wird, und
**dass** das Ausgangssignal in der Regelschaltung (40) mit einem oder mehreren Betriebs- und/oder Steuerparametern des Heizgerätes verschaltet wird.
